# EUROPEAN PATENT APPLICATION

(11) **EP 4 851 674 A1**
(43) Date of publication of application: **09.12.2026**
(21) Application number: 26177807.0
(22) Date of filing: 11.05.2026
(51) Int. Cl.: G01S 17/95, G01S 7/48, G01S 7/481, G01S 7/487, G01S 17/10, G01S 17/18, G01S 17/58, G01S 17/88

(54) **PHANTOM DETECTION FOR AIR DATA**

(30) Priority: 04.06.2025 US 202563817636 P; 12.02.2026 US 202619538703
(71) Applicant: Honeywell International Inc., Charlotte, NC 28202 (US)
(72) Inventor: GAO, Kaizhong, Charlotte, 28202 (US)
(74) Representative: Haseltine Lake Kempner LLP

(57) **Abstract**

A method comprises: aligning laser emitting optics and receiving optics to overlap for distances between tens and thousands of meters; conducting range resolved measurement for entire scattered signal sequence for each laser pulse; processing first data for within region of interest; processing second data for beyond region of interest; storing, in system, second data for beyond region of interest as stored second data; dynamically adjusting, by system, stored second data for beyond region of interest based on speed and direction of vehicle; when part of stored second data for beyond region of interest enters region of interest, processing first data for within region of interest with part of stored second data for beyond region of interest; and reporting measurements based on processing of first data for within region of interest with part of stored second data for beyond region of interest.

## Description

### BACKGROUND

The aviation industry is under increasing pressure to improve fuel efficiency and enhance flight safety.

### SUMMARY

A method comprises: aligning laser emitting optics and receiving optics to overlap for distances between tens of meters and thousands of meters; conducting a range resolved measurement for an entire scattered signal sequence for each laser pulse; processing first data for within a region of interest; processing second data for beyond the region of interest; storing, in a system, the second data for beyond the region of interest as stored second data; dynamically adjusting, by the system, the stored second data for beyond the region of interest based on speed and direction of a vehicle; when part of the stored second data for beyond the region of interest enters the region of interest, processing the first data for within the region of interest with the part of the stored second data for beyond the region of interest; and reporting measurements based on processing of the first data for within the region of interest with the part of the stored second data for beyond the region of interest.

A system comprises: at least one laser source configured to generate light; at least one line of sight configured to define an optical path to emit the light toward a measurement area having a region of interest and an area past the region of interest; at least one receiving optics aligned with the at least one line of sight to receive scattered light scattered from the measurement area; at least one detector configured to receive the scattered light scattered from the measurement area from the at least one receiving optics; and processing circuitry configured to: receive a signal representing the scattered light from the at least one detector; conduct range resolved measurement for entire scattered signal sequence for any given pulse of the at least one laser source; process first data for within a region of interest; process second data for beyond a region of interest; store the second data for beyond the region of interest as stored second data; dynamically adjust the stored second data for beyond the region of interest based on speed and direction of a vehicle; when part of the stored second data for beyond the region of interest enters the region of interest, processing the first data for within the region of interest with the part of the stored second data for beyond the region of interest; and report measurements based on processing of the first data for within the region of interest with the part of the stored second data beyond the region of interest.

A method comprises: determining a reporting frequency and a spatial resolution for an aircraft; collecting per-pulse data using power output from lasers determined at a given operation condition; recording speed and direction of the aircraft continuously while collecting the per-pulse data; extracting range-resolved data for the aircraft from the per-pulse data; calculating a location for the aircraft based on the speed and direction of the aircraft being recorded continuously; calculating at least one of a distance traveled by the aircraft or a shift in a value of a spatial grid based on the location of aircraft and a time difference for each step between laser pulses; realigning each pulse measurement result; mapping measured data back to the spatial grid; applying a weighted average; and reporting measured results as a single point of data per grid based on the measured results from all laser pulses.

In examples, the techniques described herein improve signal to noise ratio (SNR) and measurement precision for the region of interest without increasing reporting latency. In examples, this is achieved by processing and buffering measurements beyond the region of interest in advance and fusing buffered measurements when they correspond to locations within the region of interest as an aircraft moves, rather than extending the reporting region of interest to longer ranges.

### BRIEF DESCRIPTION OF DRAWINGS

Understanding that the drawings depict only exemplary embodiments and are not therefore to be considered limiting in scope, the exemplary embodiments will be described with additional specificity and detail through the use of the accompanying drawings, in which:
Figure 1 shows a system implementing a detection method for phantom detection onboard an aircraft with an extended range far exceeding the reporting distance in a region of interest by extending into a phantom detection region.
Figure 2 is an example method for implementing phantom detection with an extended range exceeding the reporting distance.
Figure 3A is an example showing an operation mode for a baseline configuration, where data collection is based on single pulse per measurement.
Figure 3B is an example showing an operation mode for the proposed solution's enhanced configuration.
Figures 3C show the measurement of wind speed uncertainty in meters per second using the baseline configuration compared to the proposed solution's enhanced configuration while using phantom detection.
Figures 3D show the measurement of wind speed uncertainty in meters per second using the baseline configuration compared to the proposed solution's enhanced configuration while using phantom detection with an asynchronous detection.
Figures 3E show the measurement of wind speed uncertainty in meters per second using the baseline configuration compared to the proposed solution's enhanced configuration while using phantom detection with a range in the thousands of meters.
Figure 4 is an example method for improving the signal to noise (SNR) ratio to close the signal to noise (SNR) ratio gap required to make Gust Load Alleviation (GLA) work.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

In examples, a "region of interest" refers to a subset of ranges in front of the vehicle for which measurement results are reported with a specified update rate and latency. In examples, a "phantom detection region" (also referred to as an extended range buffer region) refers to a set of ranges beyond the region of interest for which measurements are collected and stored for later fusion with region of interest measurements.

In examples, a location label is associated with each range resolved sample or range bin and can include one or more of: a timestamp, a range value, an index into a spatial grid, aircraft speed and direction (or a velocity vector), aircraft pose (for example, position and attitude), and a line of sight (LOS) vector or pointing direction. In examples, these metadata enable mapping measurements are acquired at different times to a common spatial grid. In some implementations, speed and direction are sufficient for motion compensation; in other implementations, pose including attitude is used to account for LOS pointing variations.

In examples, the aviation industry is under increasing pressure to improve fuel efficiency and enhance flight safety. In examples, one area for the aviation industry to improve fuel efficiency related to air data is Gust Load Alleviation (GLA), which can lead to significant fuel savings. In examples, Gust Load Alleviation (GLA) includes sensing the wind ahead of an aircraft and responding in real time to smooth the ride. In examples, Gust Load Alleviation (GLA) requires a forward spatial resolution of approximately tens of meters, measurements at a forward distance of up to several hundred meters, and near real time updates.

In examples, despite the potential benefits, there is currently no effective solution for conducting measurements of air data (such as gust load). In examples, fast and accurate optical measurements of properties of a moving media (such as the air ahead of a moving vehicle) are hard to make, but may be necessary in certain applications, such as for a Gust Load Alleviation (GLA) system. In examples, current technologies such as High Altitude LiDAR Atmospheric Sensing (HALAS) and Optical Air Data System (OADS) may not fulfill this need well. In examples, current analysis techniques can bin and average data only to the extent that one can assume the measurements correspond to the same volume. In examples, knowledge of the velocity of the media (perhaps augmented by the optical measurements themselves) can be used to combine spatially resolved measurements over time and reduce uncertainties. While an aircraft is described herein, it understood that this description can apply to other vehicles.

In examples, Light Detection and Ranging (LiDAR)-based technology has emerged as a leading candidate to address this issue due to its ability to provide high-resolution spatial data. In examples, the low signal strength collected by current LiDAR systems poses a significant challenge. In examples, the signal level can be enhanced to achieve higher spatial resolution required for accurate gust load detection. In examples, this data is crucial for aircraft during flight, as it can also serve as a backup air data system for navigation. In examples, optical data is stored on a server/computer/embedded circuit on the aircraft and/or to a cloud storage system. In examples, this technology can be applied to any spatially resolved measurement of a moving media. In an example Gust Load Alleviation (GLA) system, spatially resolved velocity components of the air in front of an aircraft may be combined to get a more precise measurement at closer ranges than would otherwise be possible. In examples, while current technology is unable to meet customer requirements, the proposed technology is able to improve both precision and spatial resolution. In examples, a high performing Gust Load Alleviation (GLA) system can significantly reduce fuel consumption.

In examples, each individual LiDAR pulse has a lot of energy coming out and less signal coming back in the return signals. In examples, the signals are collected back at a high frequency (such as tens of meter resolution). In examples, the return signal is relatively small. In examples, the signal to noise (SNR) ratio gap exist for gust load measurement to achieve desired results that can be used for Gust Load Alleviation (GLA). In examples, a solution is provided to collect the maximum amount of signal for each location studied and then achieve the maximum amount or higher signal to noise (SNR) ratio and improved resolution. In examples, the expected resolution improvement at the target range is between 5 and 10 times when implementing this technology solution in addition to an asynchronous detection method using an asynchronous laser. In examples, this invention offers a solution that existing technology cannot fulfill. In examples, it helps the customer reduce fuel costs and potentially serves as a backup air data system. In examples, the resolution improvements are expected to be 5-10 times better. In examples, to improve signal to noise (SNR) ratio and close the signal to noise (SNR) ratio gap required to make Gust Load Alleviation (GLA) work.

In examples, the velocity of the aircraft is known and as the aircraft is moving forward the LiDAR is continuously sending pulses with the laser. In examples, all the signals are collected back from each pulse. In examples, as the next pulse is sent out, the aircraft will have traveled a small distance. In examples, the airspace due to the aircraft velocity is moving forward by the same amount. In examples, there is one return signal data point for the first pulse and another return signal data point for the second pulse that represents the same region in the air. In examples, the return signal data point for the first pulse and the return signal data point for the second pulse can be added together to be a higher signal amplitude. In examples, the noise power also increases by adding them together. In examples, if a number of the return signals from different pulses that overlap in time are added together, a net signal to noise (SNR) ratio improvement occurs, which results in a net resolution improvement. In examples, the return signal data point for each laser pulse are mapped along the same flight path with location/position symbols.

In examples, a pulsed laser is used along with photo multiplier tubes (PMTs) as detectors to measure spatially resolved backscattered light from each laser pulse. In examples, the PMTs trigger delay that can be dynamically adjusted in real time depending on air velocity. In examples, measurements are made with a spatial resolution that can resolve required features (such as a wind gust) and a repetition rate such that more than one measurement of the same volume are made as the media moves. In examples, optical air data (such as gust load or other air data) may be stored on the aircraft in a memory or storage devices or servers onboard the aircraft.

In examples, the PMTs (or any optical sensor) can be triggered as a fixed frequency. In examples, the PMTs (or any optical sensor) can be triggered with variable frequency adjusted in real time depending on air velocity. In examples, the collected data from different pulses can be grouped in different ways based on location information for each data point. In examples, the collected data from different pulses can be grouped with its nearest neighbors or set by a given spatial bins selected by the system.

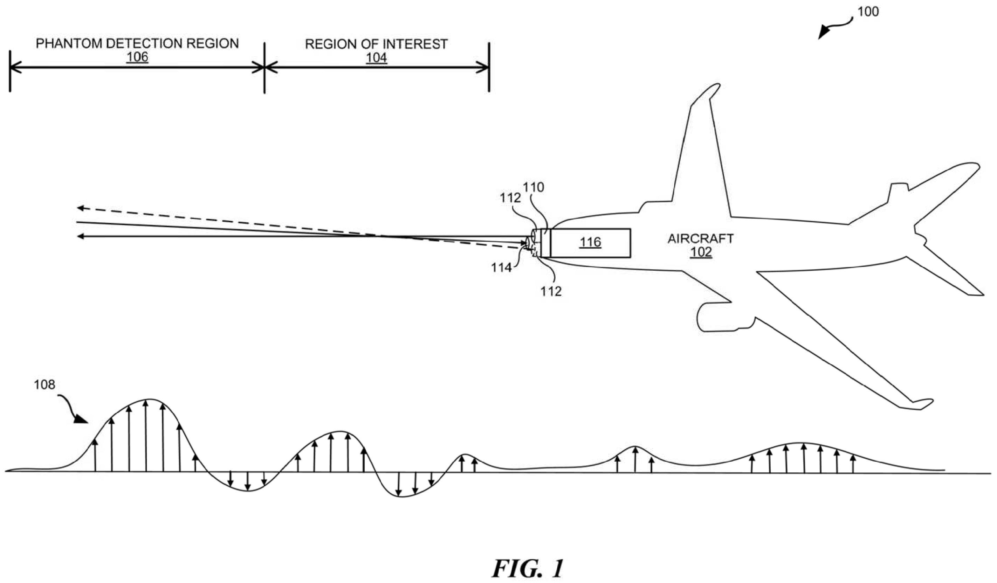

Figure 1 shows a system 100 implementing a detection method for phantom detection onboard an aircraft 102 with an extended range far exceeding the reporting distance in a region of interest 104 by extending into a phantom detection region 106. In examples, the region of interest 104 is in a range in the hundreds of meters. In examples, the phantom detection region 106 begins past the region of interest 104 in a range in the hundreds of meters to thousands of meters. In examples, the system 100 detects air data using Light Detection and Ranging (LiDAR). In examples, the air data detected by the system 100 is gust load data from a vertical gust field 108. In examples, the vertical gust field 108 represents the vertical component of wind.

In examples, the phantom detection region 106 range is three times or longer than the upper limit of the region of interest 104. In examples, the measurement and data collected for the additional range is illustrated as the proposed phantom detection region 106. In examples, the data for the extended range is also harvested and processed using the same method but being assigned to different cores in computer(s). In examples, the measurement for each distance bin is then stored in the memory and fed into the algorithm when the aircraft 102 is traveling in that direction and the region of interest 104 enters the phantom detection region 106. In examples, as the aircraft 102 flies, both the region of interest 104 and the phantom detection region 106 moves with the aircraft 102. In examples, each second, a small section in the phantom detection region 106 is converted to a region of interest 104.

In examples, at least one laser source 110 emits light into an area using laser emitting optic(s) 112. In examples, receiving optic(s) 114 are configured to receive scattered light scattered back based on the light emitted into the area. In examples, the laser emitting optic(s) 112 and receiving optic(s) 114 for the LiDAR are aligned to be overlapped for distances of between tens of meters to thousands of meters. In examples, this alignment may be improved by moving the receiving optic(s) 114 closer to the laser emitting optic(s) 112. In examples, the laser emitting optic(s) 112 for the LiDAR include two different line of sights and the scattered light is collected at the receiving optic(s) 114 for the LiDAR. In examples, the laser emitting optic(s) 112 for the LiDAR are emitted to only one line of sight or any number of line of sights greater than two. In examples, the scattered light is collected in a short period of time and the data is processed. In examples, in order to do the measurement, the receiving optic(s) 114 are aimed in the same direction as the line of sights for the laser(s) for the LiDAR. In examples, there are multiple receiving optic(s) 114 for receiving multiple line of sights or lasers. In examples, the receiving optic(s) 114 include telescope(s), lens(es), and/or other receiving optic(s). In examples, the line of sights need to be pointing forward in order to make measurements of space in front of the aircraft. In examples, the line of sights have a long distance in the overlapping region. In examples, the angle between the line of sights or lasers is selected to be low enough to have sufficient overlap, such as tens of degrees between the line of sights. In examples, large overlapping regions can result in lower signal levels. In examples, where the overlapping region is closer to the laser/receiver, the line of sights has a large angle between them and may diverge too quickly. In examples, where the overlapping region is closer to the laser/receiver, there may not be enough overlap and/or there may not be enough signal collected to have a useful signal, even if there is overlap. In examples, the LOS and receiving optics are aligned in the same direction either colinear, in parallel, or substantially close to each other (including less than 10 millimeter wavelength radar).

In examples, the telescope(s) of the receiving optic(s) 114 have a narrow open window because the laser emitting optic(s) 112 are being aimed far away. In examples, the emitted laser light from the laser emitting optic(s) 112 is not colinear with the telescope(s) of the receiving optic(s) 114 because the laser emitting optic(s) 112 are not emitted from the center of the telescope(s) of the receiving optic(s) 114-even if they are adjacent or nearby each other, there is a small angle in-between such that when the scattered light is received back at the telescope(s) of the receiving optic(s) 114, it intersects with the emitted laser light from the laser emitting optic(s) 112. In examples, the laser emitting optic(s) 112 also spread, resulting in an overlap function where the emitted laser light from the laser emitting optic(s) 112 overlaps with the scattered light received back at the telescope(s) of the receiving optic(s) 114 at an angle. In examples, the overlap function region falls between two distances from the aircraft and is where the signal is collected. In examples, the overlap increases to a point and then decreases past that point based on the angles between the emitted laser light from the laser emitting optic(s) 112 and the telescope(s) of the receiving optic(s) 114. In examples, the two distances create an upper and lower bound for the overlap function region and may be between several tens of meters and between several hundreds of meters away from the aircraft.

In examples, the light gets scattered by molecules in the overlap region and is detected by the telescope(s) of the receiving optic(s) 114. In examples, the scattered signal within the overlap region can be sensed by the LiDAR sensor. In examples, if the emitted light from the laser emitting optic(s) 112 crosses over the telescope(s) of the receiving optic(s) 114 view angle, the telescope would not be able to see the scattered light, even though these regions have scattered light. In examples, system 100 includes processing circuitry 116 (such as a data processor or other circuitry) configured to process data according to any of the methods described herein (such as method 200, method 400, etc.). In examples, the processing circuitry 116 can also be referred to generally as "circuitry," a "circuit," or "circuits" that is or are configured to implement at least some of the associated functionality. In examples, at least some of the functionality may be implemented in software or firmware executing on one or more suitable programmable processors (or other programmable device) or configuring a programmable device (for example, processors or devices included in or used to implement special-purpose hardware, general-purpose hardware, and/or a virtual platform). In examples, the software can comprise program instructions that are stored (or otherwise embodied) on or in an appropriate non-transitory storage medium or media (such as flash or other non-volatile memory, magnetic disc drives, and/or optical disc drives) from which at least a portion of the program instructions are read by the programmable processor or device for execution thereby (and/or for otherwise configuring such processor or device) in order for the processor or device to perform one or more functions described here as being implemented the software. In examples, such hardware or software (or portions thereof) can be implemented in other ways (for example, in a field programmable gate array (FPGA), application specific integrated circuit (ASIC), etc.).

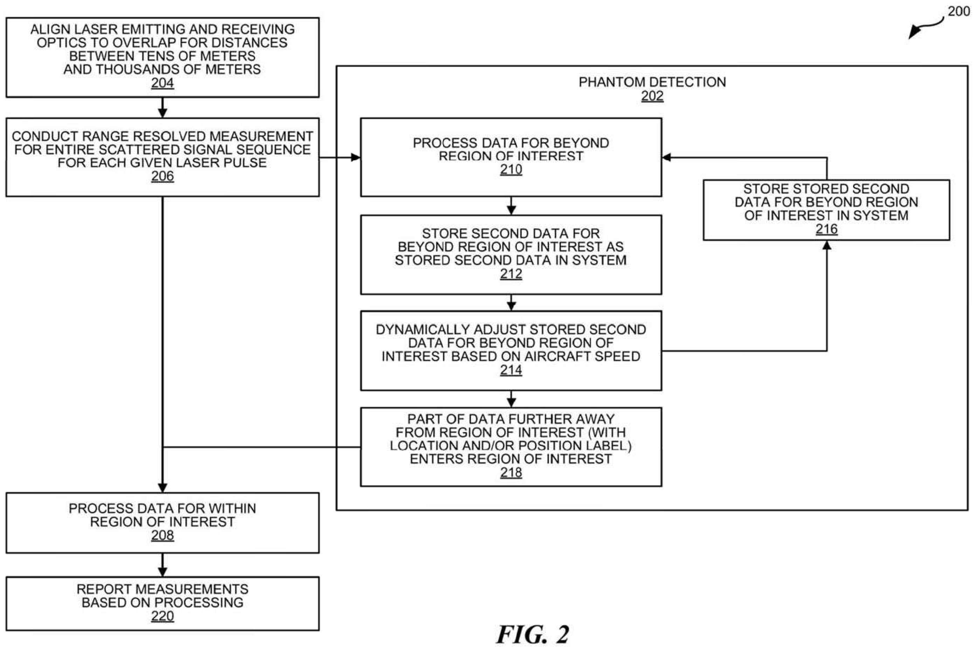

Figure 2 is an example method 200 for implementing phantom detection 202 with an extended range exceeding the reporting distance. In examples, method 200 begins at block 204 with aligning laser emitting optics and receiving optics to overlap for distances between tens of meters and thousands of meters. In examples, it is desirable to have the overlap last longer. In examples, the aligning the laser emitting optics and the receiving optics to overlap for distances between tens of meters and thousands of meters comprises aligning a first line of sight and a second light of sight. In examples, method 200 proceeds to block 206 with conducting a range resolved measurement for an entire scattered signal sequence for each laser pulse.

In examples, method 200 proceeds in parallel to block 208 with processing data for within the region of interest and blocks 210 through 218 within the phantom detection 202. In examples, method 200 proceeds to block 210 with processing second data for beyond the region of interest. In examples, method 200 proceeds to block 212 with storing second data for beyond the region of interest as stored second data in the system. In examples, method 200 proceeds to block 214 with dynamically adjusting the stored second data for beyond the region of interest based on the aircraft speed. In examples, method 200 proceeds from block 214 to block 216 with storing the second data for beyond the region of interest in the system and then using that data again at block 210. In examples, this data stored at block 216 is feedback provided to the block 210.

In examples, as time progresses, data that was for beyond the region of interest is now within the region of interest because the region of interest is moving and is always a certain range in front of the aircraft. In examples, regardless of how much overlap there is, it is attempted to detect all regions where there is overlap. In examples, the information that is beyond the region of interest is still processed and stored at block 216. In examples, the data that is beyond the region of interest may be processed using different algorithms than the data that falls within the region of interest. In examples, as the aircraft is flying a certain distance, the reference location is being shifted by the same distance. In examples, the signal from the same location is being added together for each new pulse. In examples, by the time the reference points that are getting closer fall into the region of interest, the new measurement data from block 206 is taken along with the previously stored information from for beyond the field from block 216 of interest and process at block 210.

In examples, method 200 proceeds from block 214 to block 218 with part of the data for beyond the region of interest entering the region of interest region. In examples, the data for beyond the region of interest includes location and/or position labels. In examples, method 200 proceeds to block 208 with processing data for within the region of interest. In examples, the information is timely reported to minimize delay. In examples, the data being processed at block 208 comes from both block 206 (originally in the region of interest) and block 218 (as second data originally for beyond the region of interest, but subsequently entering the region of interest). In examples, the data processed in the phantom detection region 106 has a lower signal level than the data processed in the region of interest 104 and a large amount of information may be accumulated together. In examples, different methods can be used on this large amount of information. In examples, this enables capture of the data for beyond the region of interest in the system for use once the same position is within the region of interest of the system without introducing the delay associated with increasing the region of interest to include beyond distances. In examples, method 200 proceeds to block 220 with reporting measurements based on the processing at block 208. In examples, blocks 204, 206, 208, and 220 are performed continuously in addition to blocks 210 through 218 in phantom detection 202.

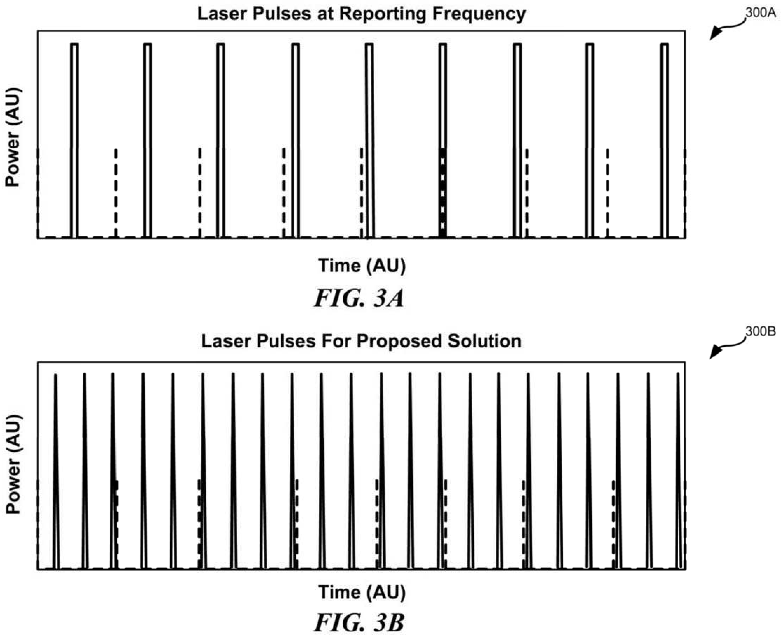

Figures 3A-3E show figures showing the baseline configuration and the improved configuration with asynchronous detection (where the measurement is not synchronized with the actual reported measurement of frequency, such as to an aircraft). In examples, rather than fix the laser pulse at a frequency at which the aircraft is expecting the data to be reported out, regardless of the frequency needed for reporting to the aircraft, the system is configured to max out the laser power output at whatever frequency works best. In examples, there is potential for maximum power output when the repetition rate of the laser is multiplied by the pulses energy such that the total accumulated amplitude of the laser pulses will get to maximum, so there is the potential to collect the maximum amount of the signal. In examples during operation, the laser is pumped and emitted to two different line of sights and the scattered light is collected. In examples, for each pulse, each of these different locations of the information is collected. In examples, the system re-constructs the gust load versus the distance in front of the aircraft at any given time. In examples, the system determines other air data. In examples, the time difference between each pulse and the return is recorded and then based on the aircraft speed, the distance moved between pulses is calculated with dynamic shifting, the bins anchor the location. In examples, for each pulse, it can be determined how much the scattered light coming back shifts in space. In examples, based on this information, the gust load profile is reconstructed. In examples, the resolution will eventually still be proportional to the square root of the total photons collected as a part of the signal (because the signal power is proportional to the total number of photons). In examples, the resolution will eventually have a net gain.

In examples, a reporting frequency Fr (for example, 10 Hz to 50 Hz) can differ from a laser pulse repetition frequency Fp. In examples, the laser can be operated asynchronously relative to Fr to increase average optical power, and per pulse measurements can be motion compensated and regridded (for example, by shifting, reindexing, and/or interpolation) onto a reporting spatial grid prior to reporting.

Figure 3A is an example chart 300A showing an operation mode for a baseline configuration, where data collection is based on single pulse per measurement. In examples, Figure 3A shows pulse mode operation. In examples, one pulse is excited for each reported data point in a reported frequency. In examples, if the data output is reported at 20 Hz, then it is desirable to tune the laser pulse to operate at a repetition rate of 20 Hz. In examples, if the data output is reported at 25 Hz, then it is desirable to tune the laser pulse to operate at a repetition rate of 25 Hz. In examples, it is desirable to have one laser pulse within each bin that can be collected. In examples, the multiple pulse information can be collected across different bins and then re-aligned by shifting each pulse by the same bin lengths to accumulate the data.

Figure 3B is an example chart 300B showing an operation mode for the proposed solution's enhanced configuration, where the laser sends a signal out with the maximum power measured by total power, such as by increasing: (1) per pulse energy and the repetition rate; or (2) the product of the per pulse energy and the repetition rate. In examples, it is not important whether there is zero, one, or multiple pulses within each bin and/or different numbers of pulses within different bins. In examples, the laser output is continuously maxed out, all the returns are collected, and during the pulse processing, the alignment occurs (or interpolation is done in-between) and the entire profile is reconstructed instead of finding an individual locations number.

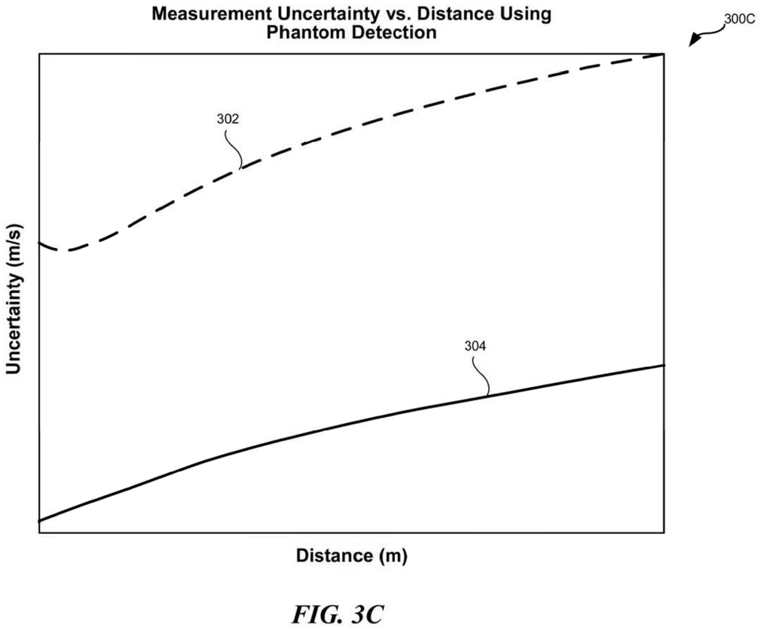

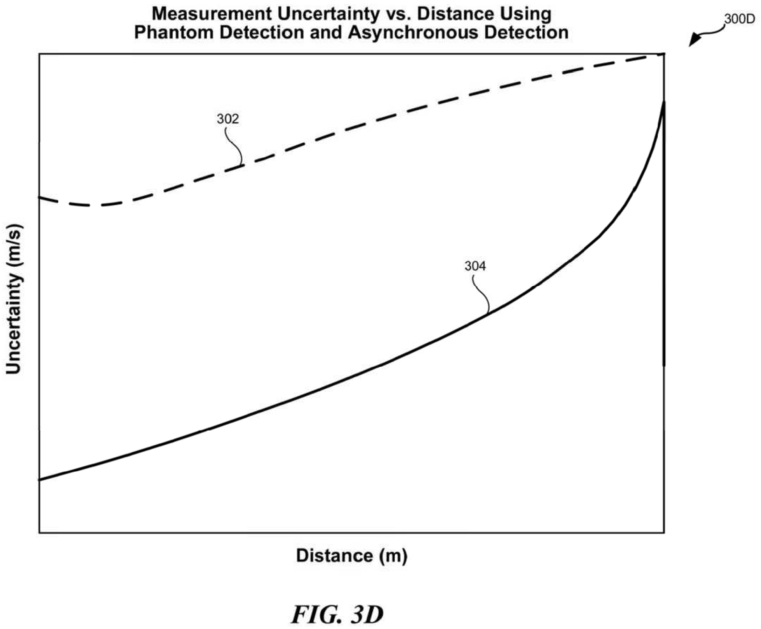

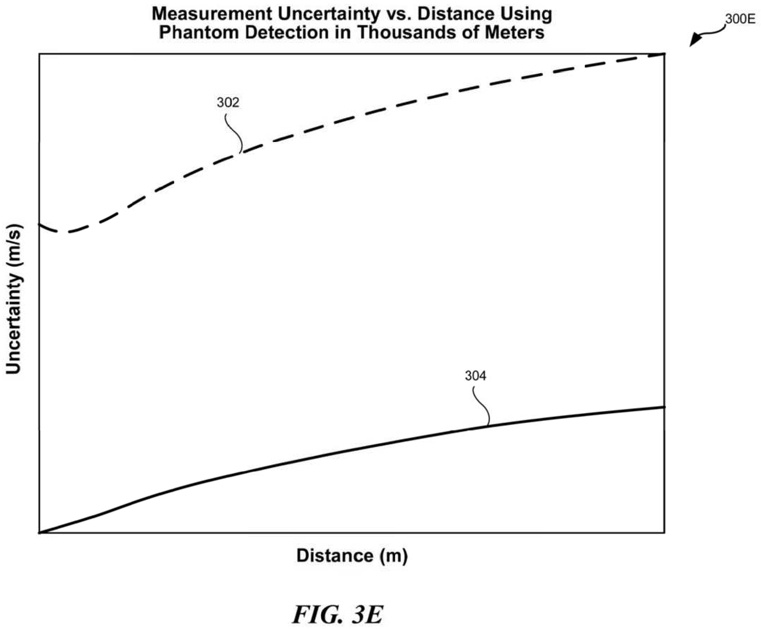

Figures 3C-3E show the measurement of wind speed uncertainty in meters per second using the baseline configuration 302 compared to the proposed solution's enhanced configuration 304 while using an overlap function. In examples, the graphs show that the uncertainty can be improved by single digital multiples of improvement. In examples, the aircraft velocity is in the hundreds of meters per second, the reporting frequency is in the tens of Hertz and the laser repetition (rep) rate is in the tens of Hertz. In examples, Figure 3C shows the improvement while just using the phantom detection, while Figure 3D shows the improvement while using the phantom detection with an asynchronous detection. In examples, Figure 3E shows the improvement while just using the phantom detection with a range in the thousands of meters. In examples, the measurement accuracy (uncertainty) can be improved by 10 times or more in a range of hundreds of meters away from the aircraft. In examples, the actual gain ratio depends on the velocity of the aircraft and the upper limit of the measurement distance.

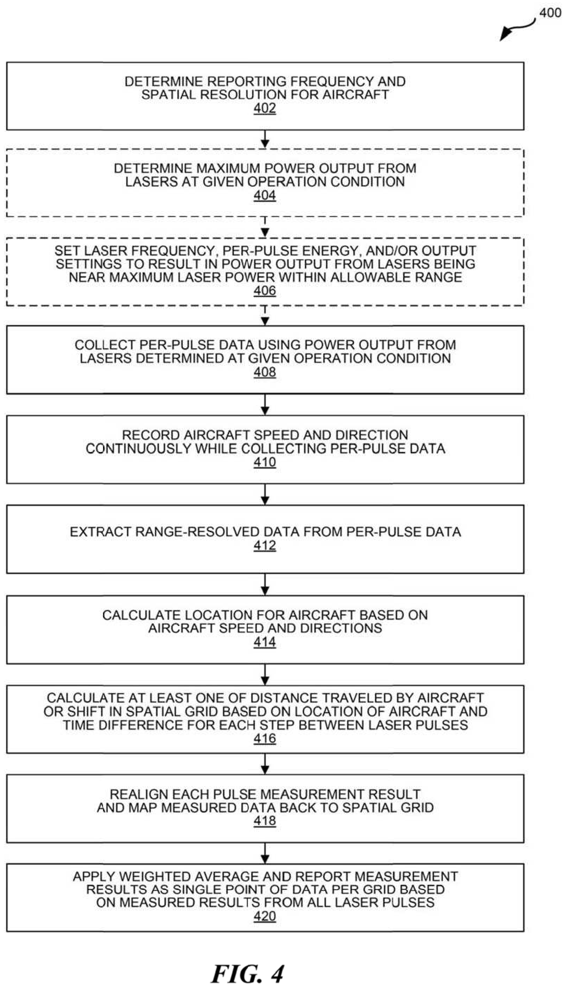

Figure 4 is an example method 400 for improving the signal to noise (SNR) ratio to close the signal to noise (SNR) ratio gap required to make Gust Load Alleviation (GLA) work. In examples, method 400 begins at block 402 with determining a reporting frequency and spatial resolution needed for the aircraft. In examples, method 400 proceeds to optional block 404 with determining the maximum power output from the lasers at a given operation condition. In examples, the given operation condition is a given altitude. In examples, method 400 proceeds to optional block 406 with setting a laser frequency, per pulse-energy, and/or output settings to result in power output from lasers being near maximum laser power within an allowable range.

In examples, method 400 proceeds to block 408 with collecting the per-pulse data using the power output from the lasers at the given operation condition determined at block 404 (instead of controlling the laser pulse frequency to match the reporting frequency determined at block 402). In examples, the per-pulse data includes data from a range beyond the region of interest. In examples, the per-pulse data is collected regardless of the speed of the aircraft. In examples, the power output from the lasers at the given operation condition determined at block 404 may be a maximum power or a percentage of the maximum power, such as 95% of the maximum power, 90% of the maximum power, etc. when considering other factors, such as lifetime, reliability, etc.

In examples, method 400 proceeds to block 410 with recording the aircraft speed and direction continuously while collecting per-pulse data (at block 408). In examples, method 400 proceeds to block 412 with extracting range-resolved data. In examples, the extracted range-resolved data includes the range beyond the region of interest (including range extending for beyond the aircraft beyond the region of interest). In examples, extracting the range-resolved data is based on the measurement at block 410. In examples, extracting the range-resolved data is based on location of aircraft determined based on airspeed and direction of the aircraft.

In examples, data collected beyond the region of interest can be sent to separate processor(s) to analyze in parallel and the results can be stored in memory(s) and/or other storage device(s). In examples the weighted average data can be directly calculated based on memory stored data, including both within the region of interest and beyond the region of interest. In examples, since the aircraft is continuously moving, some regions in the current step beyond the region of interest will be considered within the region of interest in the following steps. In examples, new pulses will include the new space in front of the aircraft. In examples, this approach can continuously be updated and implemented to collect gains in accuracy. In examples, since there is a spacing loss, for each distance bin, the signal will monotonically reduced as it moves beyond the region of interest for beyond the aircraft. In examples, the total accumulative effect still makes a non-negligible contribution.

In examples, method 400 proceeds to block 414 with calculating the aircraft location based on the continuously recorded aircraft speed and direction (at block 410). In examples, method 400 proceeds to block 416 with calculating the distance traveled or a shift in a value of a spatial grid based on the location of the aircraft determined using data at block 408 and the time difference for each step between laser pulses. In examples, method 400 proceeds to block 418 with realigning each pulse measurement result and mapping the measured data back to the same spatial grid. In examples, method 400 proceeds to block 420 with applying a weighted average and reporting the measurement result as a single point of data per grid based on the measured results from all the laser pulses.

While detailed descriptions of one or more embodiments of the disclosure have been given above, various alternatives, modifications, and equivalents will be apparent to those skilled in the art without varying from the spirit of the disclosure. For example, while the embodiments described above refer to particular features, the scope of this disclosure also includes embodiments having different combinations of features and embodiments that do not include all of the described features. Accordingly, the scope of the present disclosure is intended to embrace all such alternatives, modifications, and variations as fall within the scope of the claims, together with all equivalents thereof. Therefore, the above description should not be taken as limiting.

### Examples

Example 1 includes a method comprising: aligning laser emitting optics and receiving optics to overlap for distances between tens of meters and thousands of meters; conducting a range resolved measurement for an entire scattered signal sequence for each laser pulse; processing first data for within a region of interest; processing second data for beyond the region of interest; storing, in a system, the second data for beyond the region of interest as stored second data; dynamically adjusting, by the system, the stored second data for beyond the region of interest based on speed and direction of a vehicle; when part of the stored second data for beyond the region of interest enters the region of interest, processing the first data for within the region of interest with the part of the stored second data for beyond the region of interest; and reporting measurements based on processing of the first data for within the region of interest with the part of the stored second data for beyond the region of interest.

Example 2 includes the method of Example 1, wherein aligning the laser emitting optics and the receiving optics to overlap for the distances between tens of meters and thousands of meters comprises: aligning a first line of sight and a second line of sight.

Example 3 includes the method of any of Examples 1-2, wherein processing the first data for within the region of interest comprises: processing the first data for a current set of scattered signals scattered from positions within a current region of interest from a current set of laser pulses.

Example 4 includes the method of any of Examples 1-3, wherein processing the first data for within the region of interest comprises: processing the first data for a current set of scattered signals scattered from positions within a current region of interest from a current set of laser pulses; and processing the first data for a previous set of scattered signals scattered outside of the current region of interest and inside a previous region of interest from the positions from a previous set of laser pulses.

Example 5 includes the method of any of Examples 1-4, wherein storing the second data for beyond the region of interest in the system comprises: storing the second data regarding locations past the region of interest along with a location label in a system, where the location label is based on speed and time reported from the vehicle or from other sensor devices.

Example 6 includes the method of any of Examples 1-5, wherein the laser emitting optics and the receiving optics are directed forward in space ahead of a direction of the vehicle.

Example 7 includes the method of any of Examples 1-6, wherein the vehicle is an aircraft.

Example 8 includes the method of any of Examples 1-7, wherein the measurements reported comprise measurements of gust load or other air data.

Example 9 includes a system comprising: at least one laser source configured to generate light; at least one line of sight configured to define an optical path to emit the light toward a measurement area having a region of interest and an area past the region of interest; at least one receiving optics aligned with the at least one line of sight to receive scattered light scattered from the measurement area; at least one detector configured to receive the scattered light scattered from the measurement area from the at least one receiving optics; and processing circuitry configured to: receive a signal representing the scattered light from the at least one detector; conduct range resolved measurement for entire scattered signal sequence for any given pulse of the at least one laser source; process first data for within a region of interest; process second data for beyond a region of interest; store the second data for beyond the region of interest as stored second data; dynamically adjust the stored second data for beyond the region of interest based on speed and direction of a vehicle; when part of the stored second data for beyond the region of interest enters the region of interest, processing the first data for within the region of interest with the part of the stored second data for beyond the region of interest; and report measurements based on processing of the first data for within the region of interest with the part of the stored second data beyond the region of interest.

Example 10 includes the system of Example 9, wherein the at least one line of sight comprises: a first line of sight emitting first light; and a second line of sight emitting second light.

Example 11 includes the system of Example 10, wherein the at least one receiving optics comprises: a first receiving line of sight for receiving first scattered light scattered from the first light; and a second receiving line of sight for receiving second scattered light scattered from the second light.

Example 12 includes the system of any of Examples 9-11, wherein the processing circuitry is configured to process the first data for within the region of interest at least in part by being configured to: process the first data for a current set of scattered signals scattered from positions within a current region of interest from a current set of laser pulses.

Example 13 includes the system of any of Examples 9-12, wherein the processing circuitry is configured to process the first data for within the region of interest at least in part by being configured to: process the first data for a current set of scattered signals scattered from positions within a current region of interest from a current set of laser pulses; and process the first data for a previous set of scattered signals scattered outside of the current region of interest and inside a previous region of interest from the positions from a previous set of laser pulses.

Example 14 includes the system of any of Examples 9-13, wherein the processing circuitry is configured to store the second data regarding locations for beyond the region of interest at least in part by being configured to: store the second data regarding locations past the region of interest along with a location label, where the location label is based on speed and time reported from the vehicle or from other sensor devices.

Example 15 includes the system of any of Examples 9-14, wherein the laser emitting optics and the receiving optics are directed forward in space ahead of a direction of the vehicle.

Example 16 includes a method comprising: determining a reporting frequency and a spatial resolution for an aircraft; collecting per-pulse data using power output from lasers determined at a given operation condition; recording speed and direction of the aircraft continuously while collecting the per-pulse data; extracting range-resolved data for the aircraft from the per-pulse data; calculating a location for the aircraft based on the speed and direction of the aircraft being recorded continuously; calculating at least one of a distance traveled by the aircraft or a shift in a value of a spatial grid based on the location of aircraft and a time difference for each step between laser pulses; realigning each pulse measurement result; mapping measured data back to the spatial grid; applying a weighted average; and reporting measured results as a single point of data per grid based on the measured results from all laser pulses.

Example 17 includes the method of Example 16, further comprising: determining maximum power output from lasers at a given operation condition.

Example 18 includes the method of any of Examples 16-17, further comprising: determining maximum power output from lasers at a given altitude.

Example 19 includes the method of any of Examples 16-18, further comprising: setting at least one of a laser frequency, a per-pulse energy, or output settings to result in the power output from the lasers being near a maximum laser power within an allowable range.

Example 20 includes the method of any of Examples 16-19, further comprising: wherein the per-pulse data includes data from a range beyond a region of interest.

## Claims

1. A method comprising:
aligning laser emitting optics and receiving optics to overlap for distances between tens of meters and thousands of meters;
conducting a range resolved measurement for an entire scattered signal sequence for each laser pulse;
processing first data for within a region of interest;
processing second data for beyond the region of interest;
storing, in a system, the second data for beyond the region of interest as stored second data;
dynamically adjusting, by the system, the stored second data for beyond the region of interest based on speed and direction of a vehicle;
when part of the stored second data for beyond the region of interest enters the region of interest, processing the first data for within the region of interest with the part of the stored second data for beyond the region of interest; and
reporting measurements based on processing of the first data for within the region of interest with the part of the stored second data for beyond the region of interest.

2. The method of claim 1, wherein aligning the laser emitting optics and the receiving optics to overlap for the distances between tens of meters and thousands of meters comprises:
aligning a first line of sight and a second line of sight.

3. The method of claim 1, wherein processing the first data for within the region of interest comprises:
processing the first data for a current set of scattered signals scattered from positions within a current region of interest from a current set of laser pulses.

4. The method of claim 1, wherein processing the first data for within the region of interest comprises:
processing the first data for a current set of scattered signals scattered from positions within a current region of interest from a current set of laser pulses; and
processing the first data for a previous set of scattered signals scattered outside of the current region of interest and inside a previous region of interest from the positions from a previous set of laser pulses.

5. The method of claim 1, wherein storing the second data for beyond the region of interest in the system comprises:
storing the second data regarding locations past the region of interest along with a location label in a system, where the location label is based on speed and time reported from the vehicle or from other sensor devices.

6. The method of claim 1, wherein the laser emitting optics and the receiving optics are directed forward in space ahead of a direction of the vehicle.

7. The method of claim 1, wherein the vehicle is an aircraft.

8. The method of claim 1, wherein the measurements reported comprise measurements of gust load or other air data.

9. A system comprising:
at least one laser source configured to generate light;
at least one line of sight configured to define an optical path to emit the light toward a measurement area having a region of interest and an area past the region of interest;
at least one receiving optics aligned with the at least one line of sight to receive scattered light scattered from the measurement area;
at least one detector configured to receive the scattered light scattered from the measurement area from the at least one receiving optics; and
processing circuitry configured to:
receive a signal representing the scattered light from the at least one detector;
conduct range resolved measurement for entire scattered signal sequence for any given pulse of the at least one laser source;
process first data for within a region of interest;
process second data for beyond a region of interest;
store the second data for beyond the region of interest as stored second data;
dynamically adjust the stored second data for beyond the region of interest based on speed and direction of a vehicle;
when part of the stored second data for beyond the region of interest enters the region of interest, processing the first data for within the region of interest with the part of the stored second data for beyond the region of interest; and
report measurements based on processing of the first data for within the region of interest with the part of the stored second data beyond the region of interest.

10. The system of claim 9, wherein the at least one line of sight comprises:
a first line of sight emitting first light; and
a second line of sight emitting second light.

11. The system of claim 10, wherein the at least one receiving optics comprises:
a first receiving line of sight for receiving first scattered light scattered from the first light; and
a second receiving line of sight for receiving second scattered light scattered from the second light.

12. The system of claim 9, wherein the processing circuitry is configured to process the first data for within the region of interest at least in part by being configured to:
process the first data for a current set of scattered signals scattered from positions within a current region of interest from a current set of laser pulses.

13. The system of claim 9, wherein the processing circuitry is configured to process the first data for within the region of interest at least in part by being configured to:
process the first data for a current set of scattered signals scattered from positions within a current region of interest from a current set of laser pulses; and
process the first data for a previous set of scattered signals scattered outside of the current region of interest and inside a previous region of interest from the positions from a previous set of laser pulses.

14. The system of claim 9, wherein the processing circuitry is configured to store the second data regarding locations for beyond the region of interest at least in part by being configured to:
store the second data regarding locations past the region of interest along with a location label, where the location label is based on speed and time reported from the vehicle or from other sensor devices.

15. A method comprising:
determining a reporting frequency and a spatial resolution for an aircraft;
collecting per-pulse data using power output from lasers determined at a given operation condition;
recording speed and direction of the aircraft continuously while collecting the per-pulse data;
extracting range-resolved data for the aircraft from the per-pulse data;
calculating a location for the aircraft based on the speed and direction of the aircraft being recorded continuously;
calculating at least one of a distance traveled by the aircraft or a shift in a value of a spatial grid based on the location of aircraft and a time difference for each step between laser pulses;
realigning each pulse measurement result;
mapping measured data back to the spatial grid;
applying a weighted average; and
reporting measured results as a single point of data per grid based on the measured results from all laser pulses.
